(19) Europäisches Patentamt
European Patent Office
Office européen des brevets

(11) **EP 3 919 318 A1**

(12) **EUROPEAN PATENT APPLICATION**
published in accordance with Art. 153(4) EPC

(43) Date of publication:
**08.12.2021 Bulletin 2021/49**

(51) Int Cl.:
***B60L 53/66*** (2019.01)

(21) Application number: **20891462.2**

(22) Date of filing: **07.07.2020**

(86) International application number:
**PCT/CN2020/100565**

(87) International publication number:
**WO 2021/159659 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2020 CN 202010092925**

(71) Applicant: **Shandong Institute Of Advanced Technology, Chinese Academy of Sciences Co., Ltd**
**Jinan, Shandong 250000 (CN)**

(72) Inventors:
• **LI, Weimin**
**Jinan**
**Shandong 250000 (CN)**
• **LIU, Guoqing**
**Jinan**
**Shandong 250000 (CN)**
• **LI, Bangchao**
**Jinan**
**Shandong 250000 (CN)**

(74) Representative: **Herrero & Asociados, S.L.**
**Cedaceros, 1**
**28014 Madrid (ES)**

(54) **INTELLIGENT CHARGING METHOD AND SYSTEM FOR ELECTRIC VEHICLE ON HIGHWAY**

(57) The invention relates to an intelligent charging method and system for an electric vehicle on an expressway. The method includes: determining whether a remaining driving mileage of the electric vehicle is greater than a driving mileage corresponding to a remaining power; if yes, collecting electric vehicle information, expressway information and charging station information; determining a shortest path according to the electric vehicle information, the expressway information, and the charging station information; generating a reservation update request according to the shortest path; determining whether there is an update event; if yes, returning to the step of acquiring the remaining driving mileage of the electric vehicle and the driving mileage corresponding to the remaining power of the electric vehicle; if not, sending the reservation update request to a charging station to determine a reservation queue of the charging station; determining whether there is an update event again; if yes, adjusting the reservation queue; charging the electric vehicle according to the adjusted reservation queue; and if not, charging the electric vehicle according to the reservation queue. The invention can make the electric vehicle reach a final destination with shortest total travel time.

FIG. 1

**Description**

**CROSS REFERENCE TO RELATED APPLICATION**

This application claims the priority of Chinese Patent Application No. 202010092925.9, entitled "Intelligent Charging Method and System for Electric Vehicle on Expressway" filed with the Chinese Patent Office on February 14, 2020, which is incorporated herein by reference in its entirety.

**TECHNICAL FIELD**

The invention relates to a field of charging electric vehicles on the expressway, in particular to an intelligent charging method and system for an electric vehicle on an expressway.

**BACKGROUND ART**

At present, the number of electric vehicles in cities is increasing year by year. Considering environmental pollution and rising fuel costs, many families have chosen new energy vehicles to replace traditional fuel vehicles for use in urban environments. However, there are many challenges for the use of electric vehicles. First of all, a limitation of battery energy density and its impact on cost limit a recharge mileage or autonomy of electric vehicles to be lower than those of fuel cells. Secondly, time required to charge an electric vehicle is quite long. Thirdly, an increase in charging power will have a negative impact on a battery life. An adoption rate of electric vehicles can be increased only by making full use of infrastructure.

At this stage, a biggest challenge in choosing electric vehicles is battery life. This challenge is not obvious in urban centers with dense charging facilities. However, in an expressway environment, a distance, an infrastructure and charging time have become main factors restricting a long-distance driving of the electric vehicle. A technology and a service required for a basic infrastructure, such as an electronic charging infrastructure, are not available everywhere on the expressway. Long charging time may cause a serious delay, not only because of a charging process itself, but also because of potential waiting time caused by a busy charging station, especially during holidays.

**SUMMARY**

The invention intends to provide an intelligent charging method and system for an electric vehicle on an expressway, which can make the electric vehicle reach a final destination with shortest total driving time including driving time, waiting time and charging time.

In order to achieve the above purposes, the invention provides the following solutions:

An intelligent charging method for an electric vehicle on an expressway, comprises:

acquiring a remaining driving mileage of the electric vehicle and a driving mileage corresponding to a remaining power of the electric vehicle;

determining whether the remaining driving mileage of the electric vehicle is greater than the driving mileage corresponding to the remaining power;

if yes, collecting electric vehicle information, expressway information and charging station information;

if not, not charging the electric vehicle;

determining a shortest path according to the electric vehicle information, the expressway information, and the charging station information;

generating a reservation update request according to the shortest path;

determining whether there is an update event;

if yes, returning to the step of acquiring the remaining driving mileage of the electric vehicle and the driving mileage corresponding to the remaining power of the electric vehicle;

if not, sending the reservation update request to a charging station to determine a reservation queue of the charging station;

determining whether there is an update event again;

if yes, adjusting the reservation queue;

charging the electric vehicle according to the adjusted reservation queue; and

if not, charging the electric vehicle according to the reservation queue.

Optionally, the determining the shortest path according to the electric vehicle information, the expressway information, and the charging station information specifically comprises:
determining the shortest path from the electric vehicle to the charging station with an improved A* search algorithm for shortest path according to the electric vehicle information, the expressway information, and the charging station information.

Optionally, the update event comprises a congestion event on the expressway, a congestion event on the charging station, or an event that an electric vehicle driver artificially changes a route.

Optionally, the sending the reservation update request to the charging station to determine the reservation queue of the charging station specifically comprises:

sending the reservation update request to the charging station;

determining charging time and a charging pile according to the reservation update request; and

generating the reservation queue of the charging station according to the charging time and the charging pile.

An intelligent charging system for an electric vehicle on an expressway, comprises:

an acquiring module, configured for acquiring a remaining driving mileage of the electric vehicle and a driving mileage corresponding to a remaining power of the electric vehicle;

a first determination module, configured for determining whether the remaining driving mileage of the electric vehicle is greater than the driving mileage corresponding to the remaining power;

a collection module, configured for collecting electric vehicle information, expressway information and charging station information when the remaining driving mileage of the electric vehicle is greater than the driving mileage corresponding to the remaining power;

an end module, configured for ending without charging the electric vehicle when the remaining driving mileage of the electric vehicle is less than or equal to the driving mileage corresponding to the remaining power;

a shortest path determination module, configured for determining a shortest path according to the electric vehicle information, the expressway information, and the charging station information;

a reservation update request generating module, configured for generating a reservation update request according to the shortest path;

a second determination module, configured for determining whether there is an update event;

a return module, configured for returning to an operation of acquiring the remaining driving mileage of the electric vehicle and the driving mileage corresponding to the remaining power of the electric vehicle when there is the update event;

a reservation queue determination module, configured for sending the reservation update request to a charging station to determine a reservation queue of the charging station when there is no update event;

a third determination module, configured for determining whether there is an update event again;

a reservation queue adjustment module, configured for adjusting the reservation queue when there is the update event;

a first charging module, configured for charging the electric vehicle according to the adjusted reservation queue; and

a second charging module, configured for charging the electric vehicle according to the reservation queue when there is no update event.

Optionally, the shortest path determination module specifically comprises:
a shortest path determining unit, configured for determining the shortest path from the electric vehicle to the charging station with an improved A* search algorithm for shortest path according to the electric vehicle information, the expressway information, and the charging station information.
Optionally, the update event comprises a congestion event on the expressway, a congestion event on the charging station, or an event that an electric vehicle driver artificially changes a route.
Optionally, the reservation queue determination module specifically comprises:

a request sending unit, configured for sending the reservation update request to the charging station;

a charging time and charging pile determining unit, configured for determining charging time and a charging pile according to the reservation update request; and

a reservation queue generating unit, configured for generating the reservation queue of the charging station according to the charging time and the charging pile.

According to the specific embodiments provided by the invention, the invention discloses following technical effects:
The intelligent charging method and system for the electric vehicle on the expressway is provided by the invention, which can make the electric vehicle reach the final destination with the shortest total driving time, including the driving time, the waiting time, and the charging time, considering various dynamic constraints. In addition, a shortest path problem with dynamic constraints is solved by the invention with an improved A* search algorithm for shortest path, then a shortcoming of the traditional A* algorithm that does not consider constraints has been overcome, to make a shortest path determination process more accurate.

## BRIEFT DESCRIPTION OF THE DRAWINGS

The invention will be further explained below in conjunction with the accompanying drawings:

Fig. 1 is a flow chart of the intelligent charging method for the electric vehicle on the expressway according to the invention;

Fig. 2 is a schematic diagram of determining the shortest path from the electric vehicle to the charging station according to the invention;

Fig. 3 is a structural schematic diagram of the intelligent charging system for the electric vehicle on the expressway according to the invention.

## DETAILED DESCRIPTION OF THE EMBODIMENTS

The technical solutions in the embodiments of the invention will be clearly and completely described below in conjunction with the accompanying drawings in the embodiments of the invention. Obviously, the described embodiments are only a part of the embodiments of the invention, rather than all the embodiments. Based on the embodiments of the invention, all other embodiments obtained by those ordinary skill in the art without creative work shall fall within the protection scope of the invention.
The invention intends to provide an intelligent charging method and system for an electric vehicle on an expressway, so as to make the electric vehicle reach a final destination with shortest total driving time including driving time, waiting time and charging time.
In order to make the above-mentioned purposes, features and advantages of the invention more obvious and easy to understand, the invention will be further described in detail below in conjunction with the accompanying drawings and specific embodiments.

The method provided by the invention relies on a charging scheduling model, which is composed of three parts: the electric vehicle, the expressways and the charging station for the electric vehicle. When the electric vehicle driving on the expressway has a remaining driving mileage greater than a driving mileage corresponding to a remaining power thereof, the electric vehicle will stop at the charging station at least once. A choice of charging stations depends on a charging strategy followed by the electric vehicle, for example, the vehicle can choose to be charged at the last charging station that arrives. The electric vehicle information include a journey, a state, a type and a schedule of the electric vehicle. Wherein, the journey of the vehicle is composed of three parts: a starting position, starting time and a destination position. The state of the electric vehicle at time k is characterized by a position on the expressway, a driving speed, and a preferred speed (i.e. an optimal speed selected according to the schedule), driving time, waiting time, charging time, and a current state of a battery. The type of the vehicle includes a maximum driving speed, a maximum battery capacity, a minimum allowable battery capacity, a fast charging power, and a power consumption per kilometer of the vehicle. The schedule includes charging stations to be docked and a target state of charge for battery charging. The expressway information includes exit positions, entrance positions, locations of the charging stations, and speed limits of the expressway. Characteristics of the charging station include charger types supported and a corresponding number of charging piles. For each of charger types, there is a queue Q(k) for the charging station representing electric vehicles waiting for an idle charging pile in the charging station, and each charging station has its own reservation system, including estimated arrival time and required charge time. Based on this reservation system, the charging station can estimate a queue length Qc(k) at given time k in the future.

The intelligent charging method of the invention aims to intelligently select charging stations to reduce the total travel time. This strategy requires real-time information. This method assumes that there is a communication infrastructure that allows charging stations and vehicles to communicate with each other, and allows vehicles to receive expressway-related information. All these assumptions do not exceed the capabilities of existing technologies. Vehicles can communicate with vehicles and people through mobile communication technology.

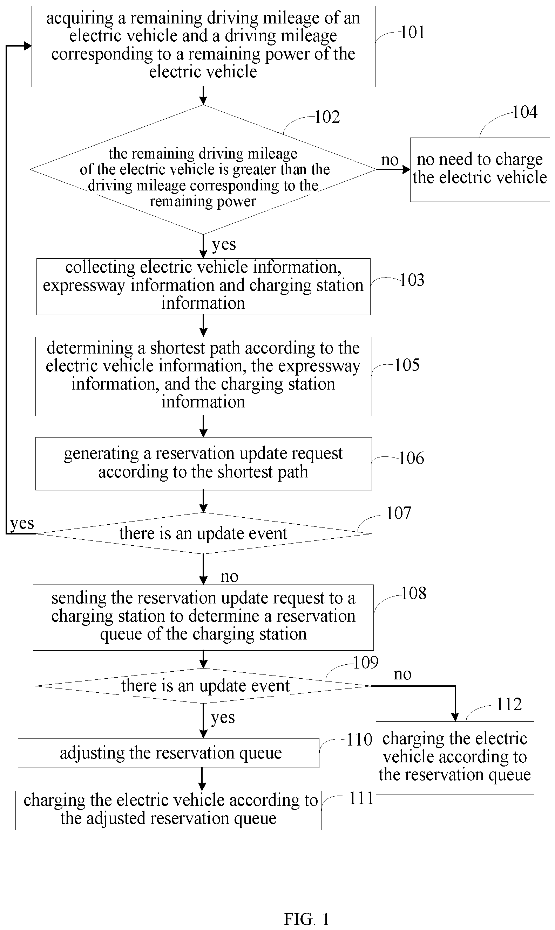

Fig. 1 is the flow chart of the intelligent charging method for the electric vehicle on the expressway according to the invention. As shown in Fig. 1, the intelligent charging method for the electric vehicle on the expressway includes steps 101-112.

Step 101: a remaining driving mileage of the electric vehicle and a driving mileage corresponding to a remaining power of the electric vehicle are acquired;

Step 102: it is determined whether the remaining driving mileage of the electric vehicle is greater than the driving mileage corresponding to the remaining power;

Step 103: if yes, electric vehicle information, expressway information and charging station information are collected.

Step 104: if not, there is no need to charge the electric vehicle.

Step 105: a shortest path is determined according to the electric vehicle information, the expressway information, and the charging station information.

Specifically, the shortest path from the electric vehicle to the charging station is determined with an improved A* search algorithm for shortest path according to the electric vehicle information, the expressway information, and the charging station information.

The improved A* search algorithm for shortest path adds constraints. The improved A* search algorithm for shortest path with constraints is specifically expressed as follows:

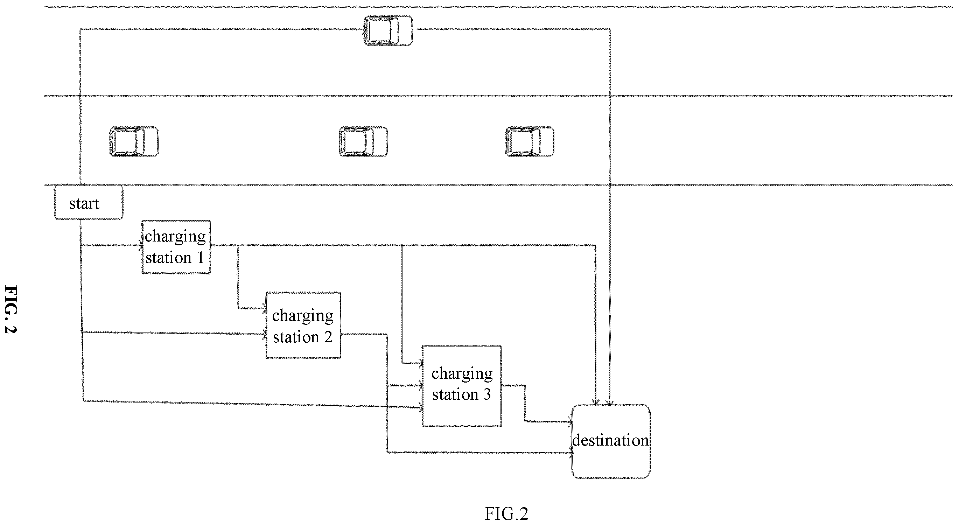

1. A priority queue is initiated to return a value as a path. A graph describing all possible paths, source nodes and destination nodes, and the electric vehicle (including a state and type thereof) as an input. Wherein, Fig. 2 is a schematic diagram of determining the shortest path from the electric vehicle to the charging station according to the invention.

2. A current node, time, and an energy consumption are taken and updated;

3. If the current node is an optimal target node, the return path is a current node path; otherwise, a search will continue;

4. When an adjacent node is searched, a current node position is updated, a time cost and an energy consumption between the two nodes are calculated, and it is determined whether a result value of feasibility analysis $E^i$ is within $[E^i_{min}, E^i_{max}]$; if not, the search will continue;

5. An accumulated energy consumption and the time are updated;

6. When compared with an optimal path so far, if the adjacent node has spent shorter time, data of the adjacent node will replace data of the optimal node; otherwise the search will continue;

7. The optimal path, i.e. the shortest path, is returned.

The process of determining the shortest path is also the process of finding a best scheduling plan to minimize the total travel time including the driving time, the waiting time, and the charging time. The determination process must meet the constraints of a single electric vehicle and the expressway:

$$\min \sum^{k} (\Delta t^i_{driv}(k) + \Delta t^i_{wait}(k) + \Delta t^i_{chrg}(k)),$$

$$\left\{ k \middle| s^i_{start} \le s^i(k) \le s^i_{end} \right\}$$

$$E^i_{\min} \le soc^i(k) \cdot E^i_{\max} \le E^i_{\max}$$

Wherein, $\Delta t^i_{driv}$ is unit driving time, $\Delta t^i_{wait}$ is unit waiting time, and $\Delta t^i_{chrg}$ is unit charging time; $s^i_{start}$ and $s^i_{end}$ are positions of the vehicle at initial time and end time, respectively; $SOC^i$ is the state of charge of the battery; and $E^i_{\min}$ and $E^i_{\max}$ are minimum and maximum power limits of the electric vehicle, respectively. For a given electric vehicle, a timetable is chosen to minimize a sum of the driving time, the waiting time and the charging time during the entire journey, with meeting an energy constraint of the electric vehicle.

The constraints in this problem are solved by introducing the improved A* search algorithm for shortest path, that is, increasing a constraint of $E^i_{\min} \le soc^i(k) \cdot E^i_{\max} \le E^i_{\max}$. Every time the adjacent node is searched, it needs be tested whether the result value of $E^i$ is within $[E^i_{min}, E^i_{max}]$. In this case, a corresponding potential path is avoided. If it is not within the power limit, the neighbor node will not be arranged into a queue of potential nodes.

Step 106: a reservation update request is generated according to the shortest path.

Step 107: it is determined whether there is an update event, wherein the update event comprises a congestion event on the expressway, a congestion event on the charging station, or an event that an electric vehicle driver artificially changes a route.

If yes, the process returns to the step 101 of acquiring the remaining driving mileage of the electric vehicle and the driving mileage corresponding to the remaining power of the electric vehicle.

Step 108: If not, the reservation update request is sent to the charging station to determine a reservation queue of the charging station, which specifically includes:

sending the reservation update request to the charging station;

determining the charging time and the charging pile according to the reservation update request; and

generating the reservation queue of the charging station according to the charging time and the charging pile.

Step 109: it is determined whether there is an update event again.

Step 110: if yes, the reservation queue is adjusted.

Step 111: the electric vehicle is charged according to the adjusted reservation queue.

Step 112: if not, the electric vehicle is charged according to the reservation queue.

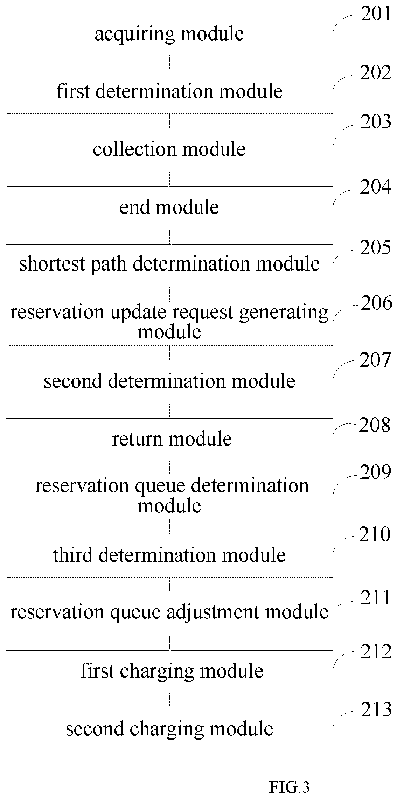

Corresponding to the above-mentioned intelligent charging method for the electric vehicle on the expressway, the invention also provides an intelligent charging system for the electric vehicle on the expressway. Fig. 3 is the structural schematic diagram of the intelligent charging system for the electric vehicle on the expressway according to the invention. The intelligent charging system for the electric vehicle on the expressway includes:

an acquiring module 201, configured for acquiring a remaining driving mileage of the electric vehicle and a driving mileage corresponding to a remaining power of the electric vehicle;

a first determination module 202, configured for determining whether the remaining driving mileage of the electric vehicle is greater than the driving mileage corresponding to the remaining power;

a collection module 203, configured for collecting electric vehicle information, expressway information and charging station information when the remaining driving mileage of the electric vehicle is greater than the driving mileage corresponding to the remaining power;

an end module 204, configured for ending without charging the electric vehicle when the remaining driving mileage of the electric vehicle is less than or equal to the driving mileage corresponding to the remaining power;

a shortest path determination module 205, configured for determining a shortest path according to the electric vehicle information, the expressway information, and the charging station information;

a reservation update request generating module 206, configured for generating a reservation update request according to the shortest path;

a second determination module 207, configured for determining whether there is an update event;

a return module 208, configured for returning to the operation of acquiring the remaining driving mileage of the electric vehicle and the driving mileage corresponding to the remaining power of the electric vehicle when there is the update event;

a reservation queue determination module 209, configured for sending the reservation update request to a charging station to determine a reservation queue of the charging station when there is no update event;

a third determination module 210, configured for determining whether there is an update event again; wherein the update event comprises a congestion event on the expressway, a congestion event on the charging station, or an event that an electric vehicle driver artificially changes a route;

a reservation queue adjustment module 211, configured for adjusting the reservation queue when there is the update event;

a first charging module 212, configured for charging the electric vehicle according to the adjusted reservation queue; and

a second charging module 213, configured for charging the electric vehicle according to the reservation queue when there is no update event.

The shortest path determination module 205 specifically comprises:
a shortest path determining unit, configured for determining the shortest path from the electric vehicle to the charging station with an improved A* search algorithm for shortest path according to the electric vehicle information, the expressway information, and the charging station information.
The reservation queue determination module 209 specifically comprises:

a request sending unit, configured for sending the reservation update request to the charging station;

a charging time and charging pile determining unit, configured for determining charging time and a charging pile according to the reservation update request; and

a reservation queue generating unit, configured for generating the reservation queue of the charging station according to the charging time and the charging pile.

The embodiments of the invention have been described in detail above with reference to the accompanying drawings, but the invention is not limited to the above-mentioned embodiments. Within the scope of knowledge possessed by those ordinary skill in the art, various amendments can also be done without departing from the purpose of the invention.

**Claims**

1. An intelligent charging method for an electric vehicle on an expressway, comprises:

   acquiring a remaining driving mileage of the electric vehicle and a driving mileage corresponding to a remaining power of the electric vehicle;
   determining whether the remaining driving mileage of the electric vehicle is greater than the driving mileage corresponding to the remaining power;
   if yes, collecting electric vehicle information, expressway information and charging station information;
   if not, not charging the electric vehicle;
   determining a shortest path according to the electric vehicle information, the expressway information, and the charging station information;
   generating a reservation update request according to the shortest path;
   determining whether there is an update event;
   if yes, returning to the step of acquiring the remaining driving mileage of the electric vehicle and the driving mileage corresponding to the remaining power of the electric vehicle;
   if not, sending the reservation update request to a charging station to determine a reservation queue of the charging station;
   determining whether there is an update event again;
   if yes, adjusting the reservation queue;
   charging the electric vehicle according to the adjusted reservation queue; and
   if not, charging the electric vehicle according to the reservation queue.

2. The intelligent charging method for the electric vehicle on the expressway according to claim 1, wherein the determining the shortest path according to the electric vehicle information, the expressway information, and the charging station information specifically comprises:
   determining the shortest path from the electric vehicle to the charging station with an improved A* search algorithm for shortest path according to the electric vehicle information, the expressway information, and the charging station information.

3. The intelligent charging method for the electric vehicle on the expressway according to claim 1, wherein the update event comprises a congestion event on the expressway, a congestion event on the charging station, or an event that an electric vehicle driver artificially changes a route.

4. The intelligent charging method for the electric vehicle on the expressway according to claim 1, wherein the sending the reservation update request to the charging station to determine the reservation queue of the charging station specifically comprises:

   sending the reservation update request to the charging station;
   determining charging time and a charging pile according to the reservation update request; and
   generating the reservation queue of the charging station according to the charging time and the charging pile.

5. An intelligent charging system for an electric vehicle on an expressway, comprises:

   an acquiring module, configured for acquiring a remaining driving mileage of the electric vehicle and a driving mileage corresponding to a remaining power of the electric vehicle;
   a first determination module, configured for determining whether the remaining driving mileage of the electric vehicle is greater than the driving mileage corresponding to the remaining power;
   a collection module, configured for collecting electric vehicle information, expressway information and charging station information when the remaining driving mileage of the electric vehicle is greater than the driving mileage corresponding to the remaining power;
   an end module, configured for ending without charging the electric vehicle when the remaining driving mileage of the electric vehicle is less than or equal to the driving mileage corresponding to the remaining power;
   a shortest path determination module, configured for determining a shortest path according to the electric vehicle information, the expressway information, and the charging station information;
   a reservation update request generating module, configured for generating a reservation update request according to the shortest path;
   a second determination module, configured for determining whether there is an update event;

a return module, configured for returning to an operation of acquiring the remaining driving mileage of the electric vehicle and the driving mileage corresponding to the remaining power of the electric vehicle when there is the update event;

a reservation queue determination module, configured for sending the reservation update request to a charging station to determine a reservation queue of the charging station when there is no update event;

a third determination module, configured for determining whether there is an update event again;

a reservation queue adjustment module, configured for adjusting the reservation queue when there is the update event;

a first charging module, configured for charging the electric vehicle according to the adjusted reservation queue; and

a second charging module, configured for charging the electric vehicle according to the reservation queue when there is no update event.

6. The intelligent charging system for the electric vehicle on the expressway according to claim 5, wherein the shortest path determination module specifically comprises:
a shortest path determining unit, configured for determining the shortest path from the electric vehicle to the charging station with an improved A* search algorithm for shortest path according to the electric vehicle information, the expressway information, and the charging station information.

7. The intelligent charging system for the electric vehicle on the expressway according to claim 5, wherein the update event comprises a congestion event on the expressway, a congestion event on the charging station, or an event that an electric vehicle driver artificially changes a route.

8. The intelligent charging system for the electric vehicle on the expressway according to claim 5, wherein the reservation queue determination module specifically comprises:

a request sending unit, configured for sending the reservation update request to the charging station;
a charging time and charging pile determining unit, configured for determining charging time and a charging pile according to the reservation update request; and
a reservation queue generating unit, configured for generating the reservation queue of the charging station according to the charging time and the charging pile.

```
┌────────────────────────────────────┐
│ acquiring a remaining driving mileage of an │─101
│ electric vehicle and a driving mileage       │
│ corresponding to a remaining power of the    │
│ electric vehicle                             │
└────────────────────────────────────┘
```

acquiring a remaining driving mileage of an electric vehicle and a driving mileage corresponding to a remaining power of the electric vehicle ─101

the remaining driving mileage of the electric vehicle is greater than the driving mileage corresponding to the remaining power ─102

no → no need to charge the electric vehicle ─104

yes

collecting electric vehicle information, expressway information and charging station information ─103

determining a shortest path according to the electric vehicle information, the expressway information, and the charging station information ─105

generating a reservation update request according to the shortest path ─106

yes ← there is an update event ─107

no

sending the reservation update request to a charging station to determine a reservation queue of the charging station ─108

there is an update event ─109   no →

yes

charging the electric vehicle according to the reservation queue ─112

adjusting the reservation queue ─110

charging the electric vehicle according to the adjusted reservation queue ─111

FIG. 1

FIG.2

**FIG. 2**

| acquiring module | 201 |
| first determination module | 202 |
| collection module | 203 |
| end module | 204 |
| shortest path determination module | 205 |
| reservation update request generating module | 206 |
| second determination module | 207 |
| return module | 208 |
| reservation queue determination module | 209 |
| third determination module | 210 |
| reservation queue adjustment module | 211 |
| first charging module | 212 |
| second charging module | 213 |

FIG.3

## INTERNATIONAL SEARCH REPORT

| International application No. |
|---|
| **PCT/CN2020/100565** |

**A.    CLASSIFICATION OF SUBJECT MATTER**

B60L 53/66(2019.01)i

According to International Patent Classification (IPC) or to both national classification and IPC

**B.    FIELDS SEARCHED**

Minimum documentation searched (classification system followed by classification symbols)

B60L; G06Q

Documentation searched other than minimum documentation to the extent that such documents are included in the fields searched

Electronic data base consulted during the international search (name of data base and, where practicable, search terms used)

CNPAT, WPI, EPODOC, CNKI: 中科先进技术研究院, 电动, 车, 高速, 智能, 充电, 电量, 里程, 距离, 路径, 短, 充电站, 更新, 预约; electric+, automobile, vehicle, expressway, highway, intelligent, charg+, power, distance, path, shortest, station, updat +, reservation

**C.    DOCUMENTS CONSIDERED TO BE RELEVANT**

| Category* | Citation of document, with indication, where appropriate, of the relevant passages | Relevant to claim No. |
|---|---|---|
| PX | CN 111267667 A (SHANDONG INSTITUTE OF ADVANCED TECHNOLOGY, CHINESE ACADEMY OF SCIENCES) 12 June 2020 (2020-06-12) claims 1-8 | 1-8 |
| A | CN 104184190 A (STATE GRID CORPORATION OF CHINA et al.) 03 December 2014 (2014-12-03) description, paragraphs [0066]-[0117], and figure 1 | 1-8 |
| A | CN 106096793 A (HARBIN ENGINEERING UNIVERSITY) 09 November 2016 (2016-11-09) entire document | 1-8 |
| A | CN 107323300 A (HOHAI UNIVERSITY) 07 November 2017 (2017-11-07) entire document | 1-8 |
| A | CN 105095611 A (SOUTHEAST UNIVERSITY) 25 November 2015 (2015-11-25) entire document | 1-8 |
| A | JP 2020004417 A (RESC LTD.) 09 January 2020 (2020-01-09) entire document | 1-8 |

☐ Further documents are listed in the continuation of Box C.          ☑ See patent family annex.

| \* | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 October 2020** | **18 November 2020** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/100565**

| Patent document cited in search report | | | Publication date (day/month/year) | Patent family member(s) | | | Publication date (day/month/year) |
|---|---|---|---|---|---|---|---|
| CN | 111267667 | A | 12 June 2020 | None | | | |
| CN | 104184190 | A | 03 December 2014 | None | | | |
| CN | 106096793 | A | 09 November 2016 | None | | | |
| CN | 107323300 | A | 07 November 2017 | CN | 107323300 | B | 24 May 2019 |
| CN | 105095611 | A | 25 November 2015 | CN | 105095611 | B | 02 January 2018 |
| JP | 2020004417 | A | 09 January 2020 | None | | | |

Form PCT/ISA/210 (patent family annex) (January 2015)

**EP 3 919 318 A1**

## REFERENCES CITED IN THE DESCRIPTION

### Patent documents cited in the description

- CN 202010092925